# EUROPÄISCHE PATENTSCHRIFT

(11) **EP 3 938 682 B1**
(45) Veröffentlichungstag und Bekanntmachung des Hinweises auf die Patenterteilung: **16.08.2023**
(21) Anmeldenummer: 20706941.0
(22) Anmeldetag: 17.02.2020
(51) Int. Cl.: F16H 57/04

(54) **GETRIEBE MIT GEHÄUSE UND KÜHLANORDNUNG**
TRANSMISSION WITH HOUSING AND COOLING ASSEMBLY
BOÎTE DE VITESSES COMPRENANT UN BOÎTIER ET UN AGENCEMENT DE REFROIDISSEMENT

(30) Priorität: 11.03.2019 DE 102019001669
(43) Veröffentlichungstag der Anmeldung: 19.01.2022
(73) Patentinhaber: SEW-EURODRIVE GmbH & Co. KG, 76646 Bruchsal (DE)
(72) Erfinder: SOARES, Juliano Cesar, 13340-486 Indaiatube-SP (BR); VIEIRA, Antonio Ventriglia, 13320-370 Salto-SP (BR)
(86) Internationale Anmeldenummer: PCT/EP2020/025074
(87) Internationale Veröffentlichungsnummer: WO 2020/182342

(56) Entgegenhaltungen:
- DE-A1- 10 315 684
- DE-U1-202007 018 371
- US-A1- 2014 157 952

## Beschreibung

Die Erfindung betrifft ein Getriebe mit Gehäuse und Kühlanordnung.

Es ist allgemein bekannt, dass ein Getriebe Zahnräder und Schmierstoff aufweist, wobei die bei Betrieb auftretende Wärme aus dem Schmierstoff an die Umgebung abfließt.

**Aus der** US 2014/157952 A1 **ist als nächstliegender Stand der Technik ein Wärmetauscher für ein Getriebegehäuse bekannt.**

**Aus der** DE 103 15 684 A1 **ist ein im Getriebe integrierter Wärmetauscher bekannt.**

**Aus der** DE 20 2007 018371 U1 **ist ein Wärmetauschermodul mit Kühlpatrone für ein Getriebe bekannt.**

Der Erfindung liegt daher die Aufgabe zugrunde, ein Getriebe mit verbesserter Kühlung weiterzubilden, wobei die Herstellung des Getriebes einfach sein soll.

Erfindungsgemäß wird die Aufgabe bei dem Getriebe nach den in Anspruch 1 angegebenen Merkmalen gelöst.

Wichtige Merkmale der Erfindung bei dem Getriebe mit Gehäuse und Kühlanordnung sind, dass eine Verbindungsfläche an der Außenseite des Getriebes angeordnet ist,
wobei innerhalb der Verbindungsfläche eine durch das Gehäuse durchgehende Ausnehmung angeordnet ist,
wobei die Kühlanordnung Rohre, ein Deckelteil und ein Anschlussteil aufweist.

Von Vorteil ist dabei, dass eine Kühlanordnung in einfacher Weise am Getriebe vorsehbar ist. Dabei ist zwar die Verbindungsfläche an der Außenseite des Gehäuses angeordnet, aber die Kühlanordnung ragt in den Innenraumbereich des Getriebes hinein. Somit ist das Schmieröl des Getriebes entwärmbar, da die Rohre der Kühlanordnung von einem Kühlmedium, wie Wasser, Öl oder Luft, durchströmt werden. Die Rohre sind vorzugsweise aus Metallblech gefertigt und daher mechanisch ausreichende stabil.

Vorteilig ist die einfache Montage, da die Kühlanordnung nur durch die innerhalb der Verbindungsfläche angeordnete Ausnehmung durchgeschoben werden muss und das Anschlussteil samt Deckelteil mittels Schrauben an das Gehäuse angeschraubt werden muss. Die Kühlanordnung ist somit bei Montage des Getriebes verbindbar, insbesondere bevor das Getriebe mit Schmieröl befüllt wird.

Bei einer vorteilhaften Ausgestaltung sind in die Verbindungsfläche Gewindebohrungen eingebracht, in welche Schrauben eingeschraubt sind,
insbesondere wobei die Schraubenköpfe der Schrauben das Anschlussteil auf das Deckelteil und somit das Deckelteil auf die Verbindungsfläche andrücken. Von Vorteil ist dabei, dass eine Abdichtung der Kühlanordnung, insbesondere des darin fließenden Kühlmediums gegen die Umgebung und gegen den mit Schmieröl befüllten Innenraumbereich des Getriebes, in einfacher und kostengünstiger Weise sicher ausführbar ist.

**Erfindungsgemäß** weist das Anschlussteil an seiner dem Deckelteil zugewandten Seite zwei voneinander beabstandete jeweils einen Kanal bildende Vertiefungen auf,
wobei in den ersten der beiden Kanäle eine erste, durch das Anschlussteil durchgehende Ausnehmung mündet, insbesondere welche als Einlass für ein Kühlmedium fungiert,
wobei in den zweiten der beiden Kanäle eine zweite, durch das Anschlussteil durchgehende Ausnehmung mündet, insbesondere welche als Auslass für ein Kühlmedium fungiert. Von Vorteil ist dabei, dass ein rein laminares Durchströmen des jeweiligen gesamten Kanals verhinderbar ist und somit eine verbesserte Wärmeaufnahme erreichbar ist.

**Erfindungsgemäß** weist jeder der Kanäle voneinander beabstandete Verbreiterungen auf,
insbesondere so, dass der Kanalquerschnitt nicht konstant ist. Von Vorteil ist dabei, dass eine turbulentere Strömung uns somit eine verbesserte Wärmeaufnahme erreichbar ist.

Bei einer vorteilhaften Ausgestaltung ist jeder der Kanäle durch das Anschlussteil und das Deckelteil begrenzt. Von Vorteil ist dabei, dass jeder Kanal durch das Verbinden des Anschlussteils mit dem Deckelteil herstellbar ist.

**Erfindungsgemäß** sind der Einlass und die Verbreiterungen des ersten Kanals in Kanalrichtung äquidistant voneinander angeordnet, insbesondere regelmäßig voneinander beabstandet angeordnet sind,
wobei der Auslass und die Verbreiterungen des zweiten Kanals in Kanalrichtung äquidistant voneinander angeordnet sind, insbesondere regelmäßig voneinander beabstandet angeordnet sind,
wobei der Abstand des Einlasses vom Auslass in Kanalrichtung weniger als ein ganzzahliges Vielfaches des Abstands zwischen den zueinander nächstbenachbarten Verbreiterungen des ersten Kanals beträgt,
wobei der Abstand zwischen den zwei Verbreiterungen des ersten Kanals in Kanalrichtung dem Abstand der beiden Verbreiterungen des zweiten Kanals in Kanalrichtung gleicht.
Bei einer vorteilhaften Ausgestaltung sind der erste und der zweite Kanal zueinander parallel ausgerichtet, also die Kanalrichtung des ersten Kanals parallel zur Kanalrichtung des zweiten Kanals ist, insbesondere wobei der erste Kanal zwei Verbreiterungen und der zweite Kanal zwei Verbreiterungen aufweist, wobei der Abstand zwischen Einlass und Auslass in Kanalrichtung dem x-fachen Abstand der beiden Verbreiterungen des ersten Kanals entspricht, wobei x ein Wert zwischen 2,2 und 2,8 ist. Von Vorteil ist dabei, dass zwischen den Kanälen eine nur dünne Wand am Anschlussteil ausgebildet ist. Denn die Verbreiterungen des ersten Kanals sind beabstandet von den Verbreiterungen des zweiten Kanals. Somit ist dem Bereich der Verbreiterung eines jeweiligen Kanals der jeweils andere Kanal schmal ausführbar.

Bei einer vorteilhaften Ausgestaltung ist das Anschlussteil spiegelsymmetrisch zu einer Ebene ausgeführt, welche den Schwerpunkt des Anschlussteils enthält und parallel zur Kanalrichtung ausgerichtet ist und parallel zur Schraubachsrichtung der zueinander parallel angeordneten Schrauben ausgerichtet ist,
insbesondere wobei der erste und der zweite Kanal zueinander parallel ausgerichtet sind, also die Kanalrichtung des ersten Kanals parallel zur Kanalrichtung des zweiten Kanals ist. Von Vorteil ist dabei, dass eine besonders einfache Herstellung ausführbar ist und das Anschlussteil um 180° verdreht montierbar ist.

Bei einer vorteilhaften Ausgestaltung weist das Deckelteil eine erste Reihe von durch das Deckelteil, insbesondere in Richtung der Schraubachsrichtung der Schrauben, durchgehende Bohrungen auf, welche geradlinig hintereinander angeordnet sind, insbesondere wobei die Bohrungen voneinander regelmäßig voneinander beabstandet sind, wobei das Deckelteil eine zweite Reihe von durch das Deckelteil, insbesondere in Richtung der Schraubachsrichtung der Schrauben, durchgehende Bohrungen aufweist, welche geradlinig hintereinander angeordnet sind, insbesondere wobei die Bohrungen voneinander regelmäßig voneinander beabstandet sind,
wobei ein jeweiliges Rohr erster Sorte mit seinem jeweiligen ersten Ende im (2n - 1)-ten Bohrloch der ersten Reihe mündet und mit seinem jeweiligen anderen Ende im (2n) - ten Bohrloch der zweiten Reihe mündet,
wobei ein jeweiliges Rohr zweiter Sorte mit seinem jeweiligen ersten Ende im (2n) -ten Bohrloch der ersten Reihe und mündet mit seinem jeweiligen anderen Ende im (2n - 1) -ten Bohrloch der zweiten Reihe,
wobei n eine natürliche Zahl ist. Von Vorteil ist dabei, dass eine verbesserte Stabilität erreichbar ist. Denn durch dieses kreuzweise Anordnen der Rohre und die Verwendung von Verbindungsmitteln, welche quer ausgerichtet sind zur Erstreckungsrichtung der Rohre ist eine besondere hohe Steifigkeit erreichbar.

Bei einer vorteilhaften Ausgestaltung überragt ein jeweiliges Rohr zweiter Sorte ein jeweiliges Rohr erster Sorte kreuzweise,
insbesondere wobei das Rohr zweiter Sorte länger als das Rohr erster Sorte ist. Von Vorteil ist dabei, dass eine hohe Stabilität der Kühlanordnung gegen Durchbiegen oder Biegeschwingungen oder anderer Schwingungen erreichbar ist, insbesondere in Zusammenwirkung mit Verbindungsstegen.

Bei einer vorteilhaften Ausgestaltung nehmen vom Deckelteil und voneinander beabstandete Verbindungsteile die Rohre auf und erstrecken sich quer zur Erstreckungsrichtung der Rohre. Von Vorteil ist dabei, dass die Kühlanordnung gegen Schwingungen stabilisierbar ist. Dabei wird die kreuzweise Ausrichtung der Rohre erster zu den Rohren zweiter Art zusätzlich stabilisierend.

Bei einer vorteilhaften Ausgestaltung ragt die Kühlanordnung, insbesondere ragen die Rohre der Kühlanordnung, in oder durch den Raumbereich zwischen einem Zahnrad des Getriebes, insbesondere zwischen dem abtreibenden Zahnrad des Getriebes, und der Innenwand des Gehäuses des Getriebes,
insbesondere wobei das Zahnrad mit einem weiteren Zahnrad in Eingriff ist. Von Vorteil ist dabei, dass die Kühlanordnung nur geringen Platzbedarf benötigt.

Bei einer vorteilhaften Ausgestaltung ist das Getriebe ein Parallelwellengetriebe und/oder weist weitere Zahnräder auf. Von Vorteil ist dabei, dass die Kühlanordnung unterhalb der Zahnräder anordenbar ist und somit platzsparend im Getriebe anordenbar ist.

Bei einer vorteilhaften Ausgestaltung weist jedes der Rohre, insbesondere der ersten und der zweiten Sorte, einen U-förmig gebogenen Bereich auf, welcher zwei gleich lange geradlinig verlaufende Bereiche des jeweiligen Rohrs verbindet,
wobei die beiden gleich langen, geradlinig verlaufenden Bereiche des jeweiligen Rohrs erster Sorte kürzer sind als die beiden gleich langen, geradlinig verlaufenden Bereiche des jeweiligen Rohrs zweiter Sorte,
insbesondere wobei der U-förmig gebogene Bereich des jeweiligen Rohrs erster Sorte identisch ausgeführt ist wie der U-förmig gebogene Bereich des jeweiligen Rohrs zweiter Sorte. Von Vorteil ist dabei, dass das Rohr zweiter Sorte das Rohr erster Sorte überragt und dabei quert, also kreuzt. Wegen der längeren Ausführung des geradlinigen Bereichs stären die Rohre sich gegenseitig nicht, können aber durch Verbindungsstege sehr effektiv stabilisiert werden.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

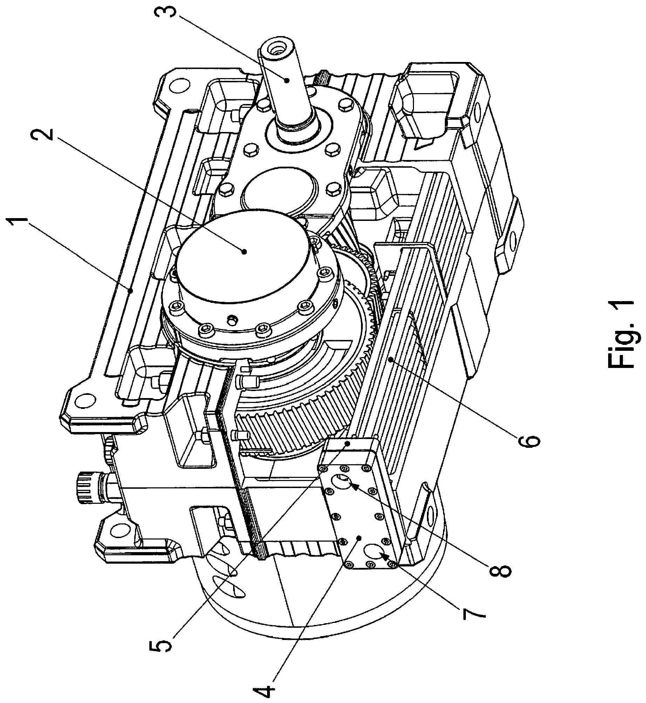

In der Figur 1 ist ein erfindungsgemäßes Getriebe in Schrägansicht und angeschnitten dargestellt, so dass eine Kühlanordnung erkennbar ist.

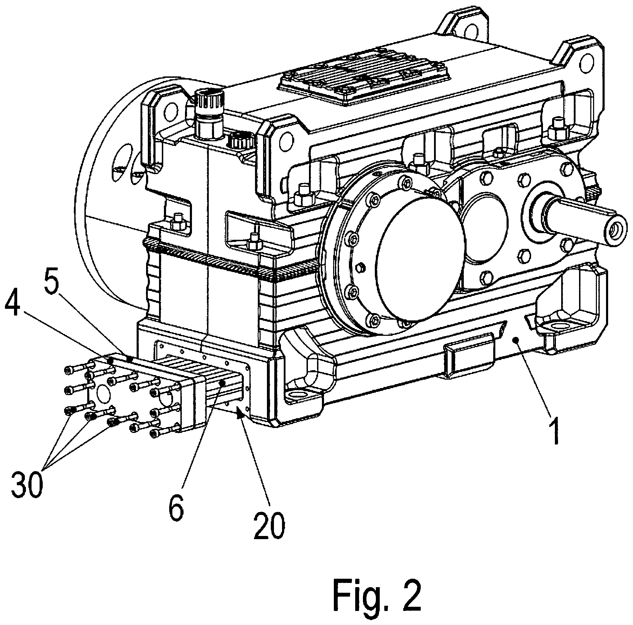

In der Figur 2 ist das Getriebe in Schrägansicht dargestellt, wobei die Kühlanordnung vor dem befestigen am Gehäuse 1 des Getriebes dargestellt ist.

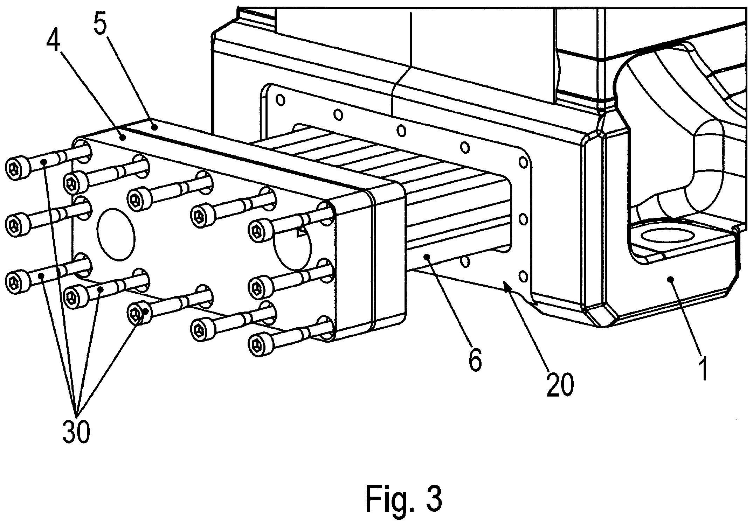

In der Figur 3 ist der Einbau der Kühlanordnung in das Gehäuse 1 des Getriebes skizziert.

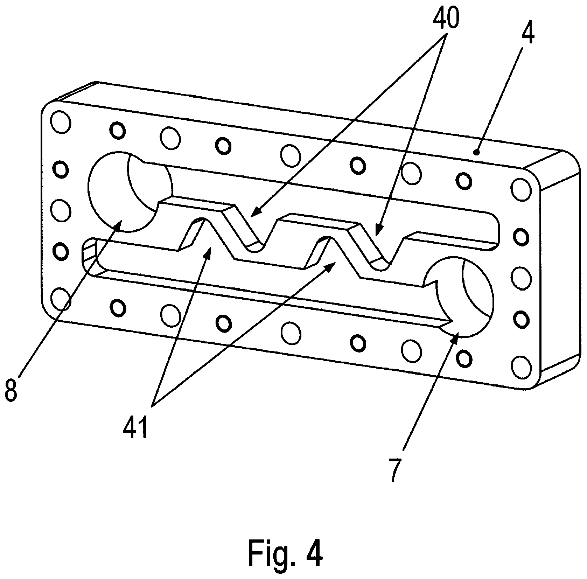

In der Figur 4 ist ein Anschlussteil 4 der Kühlanordnung in Schrägansicht gezeigt.

In der Figur 5 ist ein Deckelteil 5 der Kühlanordnung in Draufsicht dargestellt.

In der Figur 6 ist das Deckelteil 5 mit ersten verbundenen Rohren in Draufsicht dargestellt.

In der Figur 7 ist das Deckelteil 5 mit allen, insbesondere also ersten und zweiten, verbundenen Rohren in Draufsicht dargestellt.

In der Figur 8 ist eine Seitenansicht der Kühlanordnung dargestellt.

In der Figur 9 ist eine Draufsicht der Kühlanordnung dargestellt.

In der Figur 10 ist die Kühlanordnung aus einer ersten Blickrichtung in Schrägansicht dargestellt.

In der Figur 11 ist die Kühlanordnung aus einer zweiten Blickrichtung in Schrägansicht dargestellt.

Wie in den Figuren dargestellt, weist das erfindungsgemäße Getriebe ein Gehäuse auf, an welchem eine Verbindungsfläche 20 fein bearbeitet ist. Die Verbindungsfläche 20 ist nach Art eines rechteckförmigen Rahmens ausgeführt und ist eben. In die Verbindungsfläche 20 sind Gewindebohrungen eingebracht zur Befestigung der Kühlanordnung.

Die Kühlanordnung besteht aus einem Anschlussteil 4, auf welches ein Deckelteil 5 aufgesetzt und dicht verbunden ist. In das Deckelteil 5 sind Rohre 6, insbesondere U-förmig gebogene Rohre eingesetzt.

Zur Verbindung ist das Deckelteil 5 an die Verbindungsfläche 20 angedrückt, wobei eine Dichtung, insbesondere Flachdichtung, zwischengeordnet ist.

Das Andrücken wird durch Schrauben 30 bewirkt, welche jeweils durch eine durchgehende Bohrung des Anschlussteils 4, des Deckelteils 5 durchgeführt sind und in eine der Gewindebohrungen eingeschraubt ist, welche in die Verbindungsfläche 20 eingebracht ist. Dabei drückt der jeweilige Schraubenkopf der jeweiligen Schraube 30 auf das Anschlussteil 4, welches auf das Deckelteil 5 drückt, welches auf die Verbindungsfläche 20 drückt.

Auch zwischen Anschlussteil 4 und Deckelteil 5 ist eine Dichtung, insbesondere Flachdichtung, eingelegt, so dass das Anschlussteil 4 und das Deckelteil 5 dicht miteinander verbunden sind.

Am Anschlussteil 4 ist ein Einlass 7 für Kühlmittel, insbesondere Wasser, und ein Auslass 9 für Kühlmittel, insbesondere Wasser, angeordnet.

An der dem Deckelteil 5 zugewandten Seite des Anschlussteils 4 sind zwei voneinander beabstandete, insbesondere durch eine längliche Erhebung voneinander separierte Vertiefungen, insbesondere Nuten, ausgebildet, welche jeweils einen Kanal ausbilden.

Der Einlass 7 ist durch das Anschlussteil 4 durchgehend ausgebildet und mündet in den ersten der beiden Kanäle.

Der Auslass 8 ist durch das Anschlussteil 4 durchgehend ausgebildet und mündet in den zweiten der beiden Kanäle.

Jeder der beiden Kanäle weist keinen in Kanalrichtung konstanten Kanalquerschnitt auf, sondern jeweils voneinander beabstandete Verbreiterungen (40, 41). Auf diese Weise ist vermeidbar, dass die Strömung des Kühlmediums rein laminar erfolgt. Somit sind also Turbulenzen und dadurch auch ein verbessertes Durchmischen bewirkt.

Jedes der Rohre 6 mündet mit seinem jeweils ersten Ende in den ersten Kanal und mit dem jeweils anderen Ende in den anderen Kanal.

Zur Aufnahme der ersten Enden der Rohre 6 weist das Deckelteil durchgehende erste Ausnehmungen, insbesondere Bohrungen 50, auf, welche in den ersten Kanal münden.

Zur Aufnahme der zweiten Enden der Rohre 6 weist das Deckelteil durchgehende zweite Ausnehmungen, insbesondere Bohrungen 51, auf, welche in den zweiten Kanal münden.

Die ersten Bohrungen 50 sind in einer geraden Reihe angeordnet und voneinander regelmäßig beabstandet. Die zweiten Bohrungen 51 sind ebenfalls in einer geraden Reihe angeordnet und voneinander regelmäßig beabstandet.

Da jedes Rohr 6 somit den ersten Kanal mit dem zweiten Kanal verbindet, ist das jeweilige Rohr 6 vom Kühlmedium durchströmt.

Die Kühlanordnung ist unterhalb der abtreibenden Welle. Somit liegen die Rohre 6 im Ölsumpf des Getriebes angeordnet und entziehen diesem Wärme.

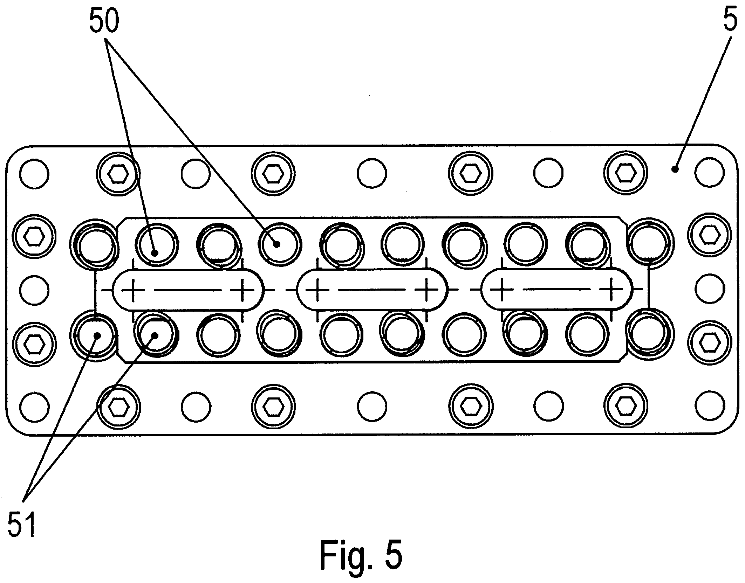

In Figur 5 ist das Deckelteil 5 ohne die Rohre 6 dargestellt. Somit ist die erste Reihe der äquidistanten Bohrungen 50 und die zweite Reihe der äquidistanten Bohrungen 51 ersichtlich.

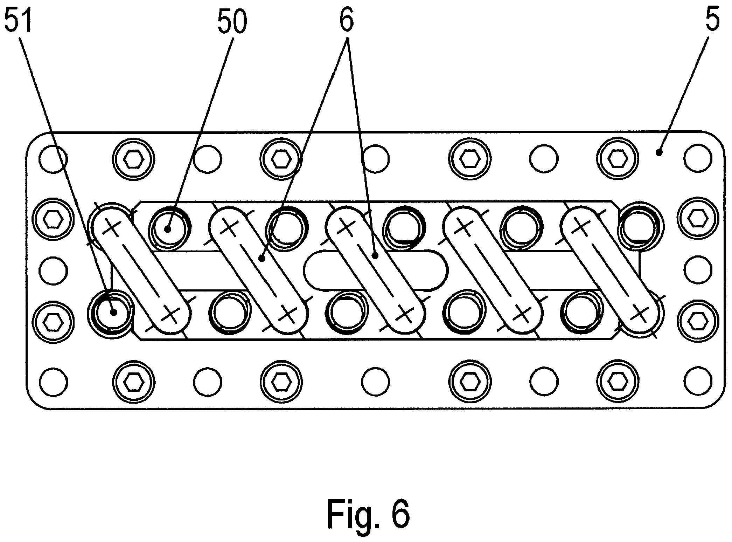

Wie in Figur 6 gezeigt, mündet ein jeweiliges Rohr 6 erster Sorte mit seinem jeweiligen ersten Ende im (2n - 1) -ten Bohrloch 50 der ersten Reihe und mündet mit seinem jeweiligen anderen Ende im (2n) - ten Bohrloch 51 der zweiten Reihe, wobei n eine natürliche Zahl ist.

Bei n = 1 wird also das erste Bohrloch 50 der ersten Reihe mittels des Rohrs erster Sorte mit dem zweiten Bohrloch 51 des Rohrs 6 der zweiten Sorte verbunden.

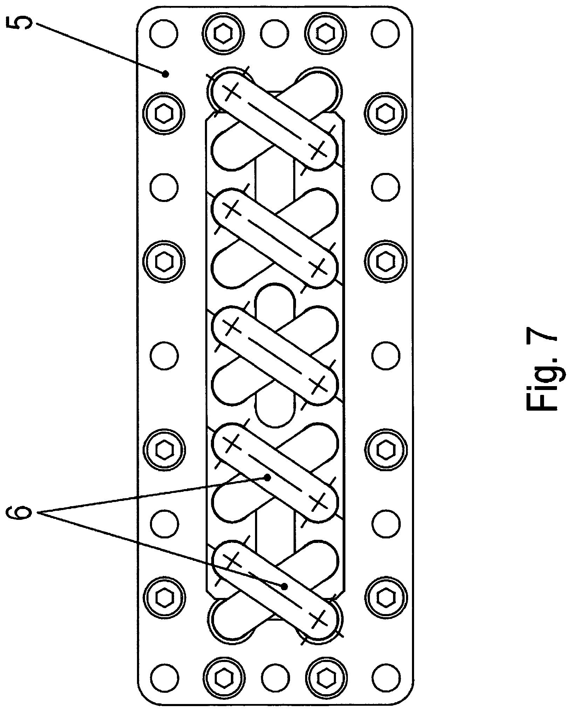

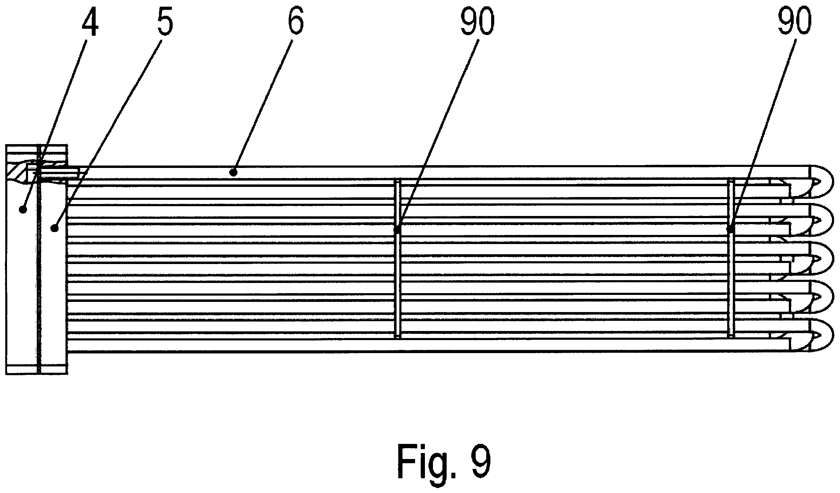

Wie in Figur 7 dargestellt, überragt das jeweilige Rohr 6 zweiter Sorte ein jeweiliges Rohr 6 erster Sorte kreuzweise. In der Draufsicht überkreuzt somit das jeweilige Rohr 6 zweiter Sorte ein jeweiliges Rohr 6 erster Sorte ist. In der Seitenansicht nach Figur 9 ist das Überragen des Rohrs 6 erster Sorte durch das Rohr 6 zweiter Sorte deutlich erkennbar.

Mittels mehrerer Rohre 6 erster und zweiter Sorte aufnehmenden Verbindungsteilen 90 ist somit eine hohe Stabilität erreichbar, wobei die Verbindungsteile 90 senkrecht zu den parallel verlaufenden Rohren 6 ausgerichtet sind und von dem Deckelteil 5 sowie voneinander beabstandet sind. Die Verbindungsstelle 90 sind vorzugsweise als Kunststoffstegteile ausführbar. Die Rohre 6 sind vorzugsweise aus Metall gefertigt.

Durch die kreuzweise Anordnung der Rohre 6 erster Sorte zu den Rohren 6 zweiter Sorte und die quer verlaufenden Verbindungsteile 90 ist die Kühlanordnung sehr stabil ausgeführt. Mechanische Schwingungen der Kühlanordnung werden auf diese Weise auch bei Verwendung von sehr langen Rohren 6 unterdrückt.

Jedes der Rohre 6 weist einen geradlinigen Hinleitungsbereich auf, welcher in einen U-förmig gebogenen Umlenkbereich mündet, welcher in einen geradlinig verlaufenden Rückleitungsbereich mündet.

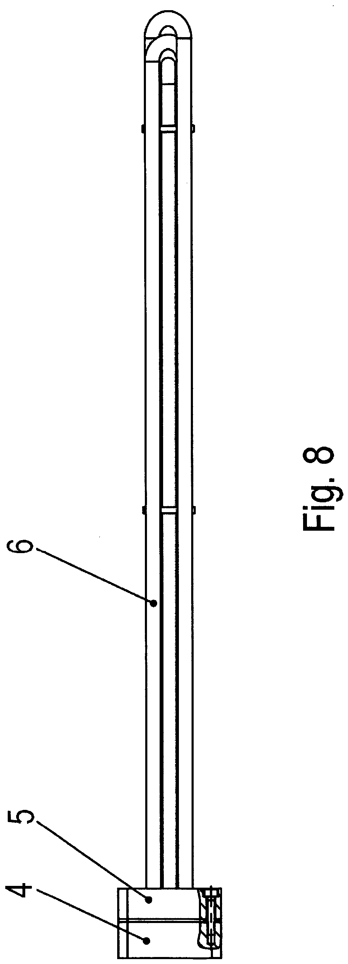

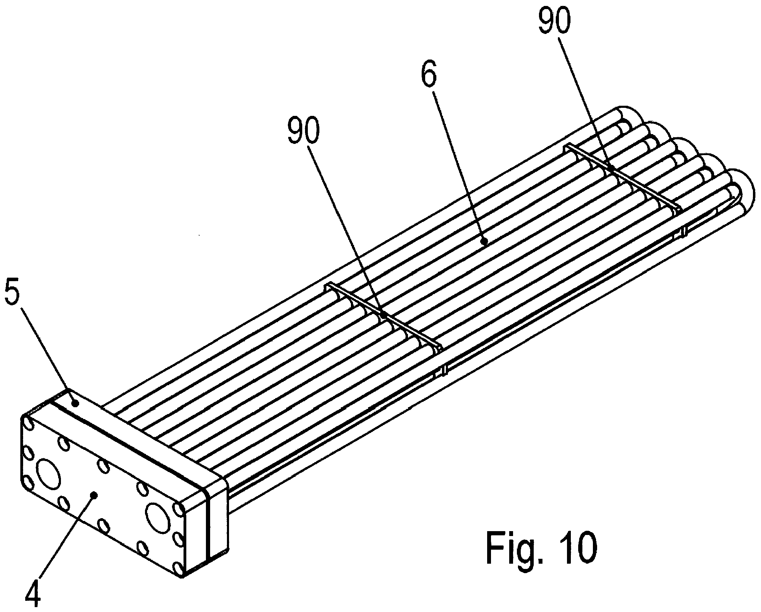

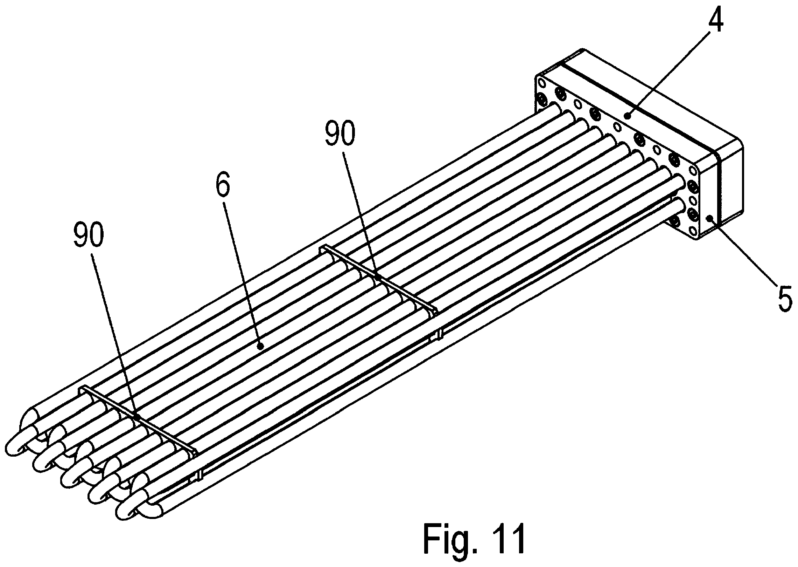

Die Figuren 8 bis 11 zeigen die Kühlanordnung in verschiedenen Blickrichtungen.

Durch die parallele Anordnung der Rohre 6, wobei die Rohre 6 erster Sorte voneinander regelmäßig beabstandet sind und die Rohre 6 zweiter Sorte ebenfalls voneinander regelmäßig beabstandet sind, ist die Kühlanordnung sehr flach ausführbar und ist daher unterhalb der abtreibenden Welle, insbesondere unterhalb des abtreibenden Zahnrads des Getriebes anordenbar. Insbesondere ist die Kühlanordnung also zwischen dem abtreibenden Zahnrad und der Innenwandung des Gehäuseteils des Getriebes angeordnet.

Das Anschlussteil 4 ist spiegelsymmetrisch zu einer Ebene ausgeführt, welche parallel zur Schraubachsrichtung der zueinander parallel ausgerichteten Schrauben 30 ist und den Schwerpunkt des Anschlussteils 4 enthält. Außerdem ist die Ebene parallel zur ersten und zweiten Kanalrichtung ausgerichtet und/oder parallel zur längeren Seite des Rechtecks der rechteckförmigen Verbindungsfläche 20.

Wie in Figur 7 gezeigt, mündet ein jeweiliges Rohr 6 zweiter Sorte mit seinem jeweiligen ersten Ende im (2n) -ten Bohrloch 50 der ersten Reihe und mündet mit seinem jeweiligen anderen Ende im (2n - 1) -ten Bohrloch 51 der zweiten Reihe, wobei n eine natürliche Zahl ist.

Bei n = 1 wird also das zweite Bohrloch 50 der ersten Reihe mittels des Rohrs 6 zweiter Sorte mit dem ersten Bohrloch 51 des Rohrs 6 der zweiten Sorte verbunden.

Die flächige Kühlanordnung ist horizontal ausgerichtet. Somit ist die Ausdehnung der Kühlanordnung in vertikaler Richtung mindestens zehnmal geringer als innerhalb der horizontalen Ebene. Dabei ist die horizontale Ebene diejenige Ebene, welche parallel zu derjenigen Ebene ist, auf welcher die Füße des Getriebes aufgestellt sind, also zur Fußebene.

Bei weiteren erfindungsgemäßen Ausführungsbeispielen ist die Normale der Fußebene nicht parallel zur Gravitationsrichtung, sondern geneigt. Dann wird hier als horizontale Ebene diese geneigte Fußebene bezeichnet.

### Bezugszeichenliste

1 Gehäuse
2 abtreibende Welle
3 eintreibende Welle
4 Anschlussteil
5 Deckelteil
6 Rohr, insbesondere U-förmig gebogenes Rohr
7 Einlass für Kühlmittel, insbesondere Wasser
8 Auslass für Kühlmittel, insbesondere Wasser
20 Verbindungsfläche
30 Schrauben
40 Verbreiterung
41 Verbreiterung
50 erste Ausnehmung
51 zweite Ausnehmung
90 Verbindungsteil

## Patentansprüche

1. Getriebe mit Gehäuse (1) und Kühlanordnung,
**wobei** eine Verbindungsfläche (20) an der Außenseite des Getriebes angeordnet ist,
wobei innerhalb der Verbindungsfläche (20) eine durch das Gehäuse (1) durchgehende Ausnehmung (50) angeordnet ist,
wobei die Kühlanordnung Rohre (6), ein Deckelteil (5) und ein Anschlussteil (4) aufweist,
wobei die Rohre (6) durch die Ausnehmung (50) hindurchragen, insbesondere in den Innenraumbereich des Getriebes, insbesondere in den Ölsumpf des Getriebes,
wobei das Deckelteil (5) auf der Verbindungsfläche (20) angeordnet ist, insbesondere wobei eine Dichtung, insbesondere Flachdichtung, zwischen Deckelteil (5) und Verbindungsfläche (20) angeordnet ist,
wobei das Anschlussteil (4) auf der von der Verbindungsfläche (20) abgewandten Seite des Deckelteils (5) angeordnet ist, insbesondere wobei eine weitere Dichtung, insbesondere weitere Flachdichtung, zwischen Deckelteil (5) und Anschlussteil (4) angeordnet ist,
**wobei das Anschlussteil (4) an seiner dem Deckelteil (5) zugewandten Seite zwei voneinander beabstandete, jeweils einen Kanal bildende Vertiefungen aufweist,**
**wobei in den ersten der beiden Kanäle eine erste, durch das Anschlussteil (4) durchgehende Ausnehmung (50) mündet, welche als Einlass (7) für ein Kühlmedium fungiert,**
**wobei in den zweiten der beiden Kanäle eine zweite, durch das Anschlussteil (4) durchgehende Ausnehmung (50) mündet, insbesondere welche als Auslass (8) für ein Kühlmedium fungiert,**
**dadurch gekennzeichnet, dass**
**jeder der Kanäle voneinander beabstandete Verbreiterungen (40, 41) aufweist, so, dass der Kanalquerschnitt nicht konstant ist und dass**
**der Einlass (7) und die Verbreiterungen (40, 41) des ersten Kanals in Kanalrichtung äquidistant voneinander angeordnet sind, insbesondere regelmäßig voneinander beabstandet angeordnet sind, und dass**
**der Auslass (8) und die Verbreiterungen (40, 41) des zweiten Kanals in Kanalrichtung äquidistant voneinander angeordnet sind, insbesondere regelmäßig voneinander beabstandet angeordnet sind, und dass**
**der Abstand des Einlasses (7) vom Auslass (8) in Kanalrichtung weniger als ein ganzzahliges Vielfaches des Abstands zwischen den zueinander nächstbenachbarten Verbreiterungen (40, 41) des ersten Kanals beträgt,**
**wobei der Abstand zwischen den zwei Verbreiterungen (40, 41) des ersten Kanals in Kanalrichtung dem Abstand der beiden Verbreiterungen (40, 41) des zweiten Kanals in Kanalrichtung gleicht.**

2. Getriebe nach Anspruch 1,
**dadurch gekennzeichnet, dass**
in die Verbindungsfläche (20) Gewindebohrungen eingebracht sind, in welche Schrauben (30) eingeschraubt sind,
insbesondere wobei die Schraubenköpfe der Schrauben (30) das Anschlussteil (4) auf das Deckelteil (5) und somit das Deckelteil (5) auf die Verbindungsfläche (20) andrücken.

3. Getriebe nach einem der vorangegangenen Ansprüche,
**dadurch gekennzeichnet, dass**
jeder der Kanäle durch das Anschlussteil (4) und das Deckelteil (5) begrenzt ist.

4. Getriebe nach einem der vorangegangenen Ansprüche,
**dadurch gekennzeichnet, dass**
**der erste und der zweite Kanal zueinander parallel ausgerichtet sind, also die Kanalrichtung des ersten Kanals parallel zur Kanalrichtung des zweiten Kanals ist,**
**insbesondere wobei der erste Kanal zwei Verbreiterungen (40, 41) und der zweite Kanal zwei Verbreiterungen (40, 41) aufweist, wobei der Abstand zwischen Einlass (7) und Auslass (8) in Kanalrichtung dem x-fachen Abstand der beiden Verbreiterungen (40, 41) des ersten Kanals entspricht, wobei x ein Wert zwischen 2,2 und 2,8 ist.**

5. Getriebe nach einem der vorangegangenen Ansprüche,
**dadurch gekennzeichnet, dass**
das Anschlussteil (4) spiegelsymmetrisch zu einer Ebene ausgeführt ist, welche den Schwerpunkt des Anschlussteils (4) enthält und parallel zur Kanalrichtung ausgerichtet ist und parallel zur Schraubachsrichtung der zueinander parallel angeordneten Schrauben (30) ausgerichtet ist,
insbesondere wobei der erste und der zweite Kanal zueinander parallel ausgerichtet sind, also die Kanalrichtung des ersten Kanals parallel zur Kanalrichtung des zweiten Kanals ist.

6. Getriebe nach einem der vorangegangenen Ansprüche,
**dadurch gekennzeichnet, dass**
das Deckelteil (5) eine erste Reihe von durch das Deckelteil (5), insbesondere in Richtung der Schraubachsrichtung der Schrauben (30), durchgehende Bohrungen aufweist, welche geradlinig hintereinander angeordnet sind, insbesondere wobei die Bohrungen voneinander regelmäßig voneinander beabstandet sind,
wobei das Deckelteil (5) eine zweite Reihe von durch das Deckelteil (5), insbesondere in Richtung der Schraubachsrichtung der Schrauben (30), durchgehende Bohrungen aufweist, welche geradlinig hintereinander angeordnet sind, insbesondere wobei die Bohrungen voneinander regelmäßig voneinander beabstandet sind,
wobei ein jeweiliges Rohr (6) erster Sorte mit seinem jeweiligen ersten Ende im (2n - 1) -ten Bohrloch 50 der ersten Reihe mündet und mit seinem jeweiligen anderen Ende im (2n) - ten Bohrloch 51 der zweiten Reihe mündet,
wobei ein jeweiliges Rohr (6) zweiter Sorte mit seinem jeweiligen ersten Ende im (2n) -ten Bohrloch 50 der ersten Reihe und mündet mit seinem jeweiligen anderen Ende im (2n - 1) - ten Bohrloch 51 der zweiten Reihe,
wobei n eine natürliche Zahl ist.

7. **Getriebe nach Anspruch 6,**
**dadurch gekennzeichnet, dass**
ein jeweiliges Rohr (6) zweiter Sorte ein jeweiliges Rohr (6) erster Sorte kreuzweise überragt,
insbesondere wobei das Rohr (6) zweiter Sorte länger als das Rohr (6) erster Sorte ist.

8. Getriebe nach einem der vorangegangenen Ansprüche,
**dadurch gekennzeichnet, dass**
vom Deckelteil (5) und voneinander beabstandete Verbindungsteil (90) die Rohre (6) aufnehmen und sich quer zur Erstreckungsrichtung der Rohre (6) erstrecken.

9. Getriebe nach einem der vorangegangenen Ansprüche,
**dadurch gekennzeichnet, dass**
die Kühlanordnung, insbesondere die Rohre (6) der Kühlanordnung, in oder durch den Raumbereich zwischen einem Zahnrad des Getriebes, insbesondere zwischen dem abtreibenden Zahnrad des Getriebes, und der Innenwand des Gehäuses (1) des Getriebes ragen,
insbesondere wobei das Zahnrad mit einem weiteren Zahnrad in Eingriff ist.

10. Getriebe nach einem der vorangegangenen Ansprüche,
**dadurch gekennzeichnet, dass**
das Getriebe ein Parallelwellengetriebe ist und/oder weitere Zahnräder aufweist.

11. Getriebe nach einem der vorangegangenen Ansprüche,
**dadurch gekennzeichnet, dass**
jedes der Rohre (6), insbesondere der ersten und der zweiten Sorte, einen U-förmig gebogenen Bereich aufweist, welcher zwei gleich lange geradlinig verlaufende Bereiche des jeweiligen Rohrs (6) verbindet,
wobei die beiden gleich langen, geradlinig verlaufenden Bereiche des jeweiligen Rohrs (6) erster Sorte kürzer sind als die beiden gleich langen, geradlinig verlaufenden Bereiche des jeweiligen Rohrs (6) zweiter Sorte,
insbesondere wobei der U-förmig gebogene Bereich des jeweiligen Rohrs (6) erster Sorte identisch ausgeführt ist wie der U-förmig gebogene Bereich des jeweiligen Rohrs (6) zweiter Sorte.

## Claims

1. A gear unit having a housing (1) and a cooling arrangement,
wherein a connecting face (20) is arranged on the outside of the gear unit,
wherein a cutout (50) which passes through the housing (1) is arranged within the connecting face (20),
wherein the cooling arrangement has tubes (6), a cover part (5) and an attachment part (4),
wherein the tubes (6) project through the cutout (50), in particular into the interior region of the gear unit, in particular into the oil sump of the gear unit,
wherein the cover part (5) is arranged on the connecting face (20), in particular wherein a seal, in particular a flat seal, is arranged between the cover part (5) and the connecting face (20),
wherein the attachment part (4) is arranged on that side of the cover part (5) facing away from the connecting face (20), in particular wherein a further seal, in particular a further flat seal, is arranged between the cover part (5) and the attachment part (4),
wherein the attachment part (4) has on its side facing the cover part (5) two indentations which are spaced apart from each other and in each case form a channel,
wherein a first cutout (50) which passes through the attachment part (4) opens into the first of the two channels, which cutout acts as an inlet (7) for a cooling medium,
wherein a second cutout (50) which passes through the attachment part (4) opens into the second of the two channels, in particular which cutout acts as an outlet (8) for a cooling medium,
**characterised in that**
each of the channels has widened portions (40, 41) which are spaced apart from each other, such that the channel cross-section is not constant, and **in that**
the inlet (7) and the widened portions (40, 41) of the first channel are arranged equidistant from each other in the channel direction, in particular are arranged spaced apart regularly from each other, and **in that**
the outlet (8) and the widened portions (40, 41) of the second channel are arranged equidistant from each other in the channel direction, in particular are arranged spaced apart regularly from each other, and **in that**
the distance of the inlet (7) from the outlet (8) in the channel direction is less than an integral multiple of the distance between the widened portions (40, 41) of the first channel which are next-adjacent to each other,
the distance between the two widened portions (40, 41) of the first channel in the channel direction being equal to the distance between the two widened portions (40, 41) of the second channel in the channel direction.

2. A gear unit according to claim 1,
**characterised in that**
threaded bores into which screws (30) are screwed are formed in the connecting face (20),
in particular with the screw heads of the screws (30) pressing the attachment part (4) onto the cover part (5) and hence the cover part (5) onto the connecting face (20).

3. A gear unit according to one of the preceding claims,
**characterised in that**
each of the channels is limited by the attachment part (4) and the cover part (5).

4. A gear unit according to one of the preceding claims,
**characterised in that**
the first and the second channel are oriented parallel to each other, i.e. the channel direction of the first channel is parallel to the channel direction of the second channel,
in particular with the first channel having two widened portions (40, 41) and the second channel having two widened portions (40, 41), the distance between the inlet (7) and the outlet (8) in the channel direction corresponding to x times the distance between the two widened portions (40, 41) of the first channel, x being a value between 2.2 and 2.8.

5. A gear unit according to one of the preceding claims,
**characterised in that**
the attachment part (4) is formed mirror-symmetrically to a plane which contains the centre of gravity of the attachment part (4) and is oriented parallel to the channel direction and parallel to the screw axial direction of the screws (30) which are arranged parallel to each other,
in particular with the first and the second channel being oriented parallel to each other, i.e. the channel direction of the first channel is parallel to the channel direction of the second channel.

6. A gear unit according to one of the preceding claims,
**characterised in that**
the cover part (5) has a first row of bores passing through the cover part (5), in particular in the direction of the screw axial direction of the screws (30), which bores are arranged rectilinearly one behind another, in particular with the bores being spaced apart [from each other] regularly from each other,
the cover part (5) having a second row of bores passing through the cover part (5), in particular in the direction of the screw axial direction of the screws (30), which bores are arranged rectilinearly one behind another, in particular with the bores being spaced apart [from each other] regularly from each other,
a respective tube (6) of the first sort opening with its respective first end in the (2n-1)th drill hole 50 of the first row and opening with its respective other end in the (2n)th drill hole 51 of the second row,
a respective tube (6) of the second sort [opening] with its respective first end in the (2n)th drill hole 50 of the first row and opening with its respective other end in the (2n-1)th drill hole 51 of the second row,
n being a natural number.

7. A gear unit according to claim 6,
**characterised in that**
a respective tube (6) of the second sort projects crosswise over a respective tube (6) of the first sort,
in particular with the tube (6) of the second sort being longer than the tube (6) of the first sort.

8. A gear unit according to one of the preceding claims,
**characterised in that**
connecting part [sic] (90) which are spaced apart from the cover part (5) and from each other receive the tubes (6) and extend transversely to the direction of extension of the tubes (6).

9. A gear unit according to one of the preceding claims,
**characterised in that**
the cooling arrangement, in particular the tubes (6) of the cooling arrangement, project(s) into or through the spatial region between a gear wheel of the gear unit, in particular between the output gear wheel of the gear unit, and the inner wall of the housing (1) of the gear unit,
in particular with the gear wheel being engaged with a further gear wheel.

10. A gear unit according to one of the preceding claims,
**characterised in that**
the gear unit is a parallel-shaft gear unit and/or has further gear wheels.

11. A gear unit according to one of the preceding claims,
**characterised in that**
each of the tubes (6), in particular of the first and the second sort, has a region bent in a U-shape which connects two rectilinear regions of equal length of the respective tube (6),
with the two rectilinear regions of equal length of the respective tube (6) of the first sort being shorter than the two rectilinear regions of equal length of the respective tube (6) of the second sort,
in particular with the region bent in a U-shape of the respective tube (6) of the first sort being embodied identically to the region bent in a U-shape of the respective tube (6) of the second sort.

## Revendications

1. Transmission comprenant un boîtier (1) et un agencement de refroidissement, une surface de liaison (20) étant agencée sur le côté extérieur de la transmission,
un évidement (50) traversant le boîtier (1) étant agencé à l'intérieur de la surface de liaison (20),
l'agencement de refroidissement présentant des tubes (6), une partie de couvercle (5) et une partie de raccordement (4),
les tubes (6) traversant l'évidement (50), en particulier dans la région libre intérieure de la transmission, en particulier dans le carter d'huile de la transmission,
la partie de couvercle (5) étant agencée sur la surface de liaison (20), en particulier un joint, en particulier un joint plat, étant agencé entre la partie de couvercle (5) et la surface de liaison (20),
la partie de raccordement (4) étant agencée sur le côté de la partie de couvercle (5) non orienté vers la surface de liaison (20), en particulier un autre joint, en particulier un autre joint plat, étant agencé entre la partie de couvercle (5) et la partie de raccordement (4),
la partie de raccordement (4) présentant sur son côté orienté vers la partie de couvercle (5) deux renfoncements espacés l'un de l'autre, formant chacun un canal, un premier évidement (50) traversant la partie de raccordement (4) débouchant dans le premier des deux canaux, qui sert d'entrée (7) pour un fluide de refroidissement, un second évidement (50) traversant la partie de raccordement (4) débouchant dans le second des deux canaux, en particulier qui sert de sortie (8) pour un fluide de refroidissement,
**caractérisée en ce que**
chacun des canaux présente des élargissements (40, 41) espacés l'un de l'autre, de telle sorte que la section transversale du canal n'est pas constante, et **en ce que** l'entrée (7) et les élargissements (40, 41) du premier canal sont agencés de manière équidistante les uns par rapport aux autres dans la direction de canal, en particulier sont agencés espacés régulièrement les uns des autres, et **en ce que** la sortie (8) et les élargissements (40, 41) du second canal sont agencés de manière équidistante les uns par rapport aux autres dans la direction de canal, en particulier sont agencés espacés régulièrement les uns des autres, et **en ce que** la distance entre l'entrée (7) et la sortie (8) dans la direction de canal est inférieure à un multiple entier de la distance entre les élargissements (40, 41) du premier canal mutuellement les plus proches,
la distance entre les deux élargissements (40, 41) du premier canal dans la direction de canal étant égale à la distance entre les deux élargissements (40, 41) du second canal dans la direction de canal.

2. Transmission selon la revendication 1,
**caractérisée en ce que**
des trous filetés sont réalisés dans la surface de liaison (20), dans lesquels des vis (30) sont vissées,
en particulier, les têtes de vis des vis (30) pressant la partie de raccordement (4) sur la partie de couvercle (5) et ainsi la partie de couvercle (5) sur la surface de liaison (20).

3. Transmission selon l'une quelconque des revendications précédentes,
**caractérisée en ce que**
chacun des canaux est délimité par la partie de raccordement (4) et la partie de couvercle (5).

4. Transmission selon l'une quelconque des revendications précédentes,
**caractérisée en ce que**
les premier et second canaux sont orientés parallèlement l'un à l'autre, à savoir que la direction de canal du premier canal est parallèle à la direction de canal du second canal,
en particulier, le premier canal présentant deux élargissements (40, 41) et le second canal présentant deux élargissements (40, 41), la distance entre l'entrée (7) et la sortie (8) dans la direction de canal correspondant à x fois la distance entre les deux élargissements (40, 41) du premier canal, x étant une valeur comprise entre 2,2 et 2,8.

5. Transmission selon l'une quelconque des revendications précédentes,
**caractérisée en ce que**
la partie de raccordement (4) est réalisée symétrique en image miroir par rapport à un plan qui contient le centre de gravité de la partie de raccordement (4) et est orienté parallèlement à la direction de canal et est orientée parallèlement à la direction d'axe de vissage des vis (30) agencées parallèlement les unes aux autres,
en particulier, les premier et second canaux étant orientés parallèlement l'un à l'autre, à savoir que la direction de canal du premier canal est parallèle à la direction de canal du second canal.

6. Transmission selon l'une quelconque des revendications précédentes,
**caractérisée en ce que**
la partie de couvercle (5) présente une première rangée d'alésages traversants s'étendant à travers la partie de couvercle (5), en particulier dans la direction de la direction d'axe de vissage des vis (30), qui sont agencés les uns derrière les autres en ligne droite, en particulier les alésages étant espacés régulièrement les uns des autres, la partie de couvercle (5) présentant une seconde rangée d'alésages traversants s'étendant à travers la partie de couvercle (5), en particulier dans la direction de la direction d'axe de vissage des vis (30), qui sont agencés en ligne droite les uns derrière les autres, en particulier les alésages étant espacés régulièrement les uns des autres, un tube respectif (6) d'un premier type débouchant avec sa première extrémité respective dans le (2n-1)-ème trou de perçage (50) de la première rangée et débouchant avec son autre extrémité respective dans le (2n)-ème trou de perçage (51) de la seconde rangée,
un tube respectif (6) d'un second type débouchant avec sa première extrémité respective dans le (2n)-ème trou de perçage (50) de la première rangée et avec son autre extrémité respective dans le (2n-1 )-ème trou de perçage (51) de la seconde rangée,
n étant un nombre naturel.

7. Transmission selon la revendication 6,
**caractérisée en ce que**
un tube respectif (6) du second type dépasse transversalement un tube respectif (6) du premier type,
en particulier, le tube (6) du second type étant plus long que le tube (6) du premier type.

8. Transmission selon l'une quelconque des revendications précédentes,
**caractérisée en ce que**
les tubes (6) reçoivent la partie de couvercle (5) et la partie de liaison (90) espacées mutuellement et s'étendent transversalement par rapport à la direction d'extension des tubes (6).

9. Transmission selon l'une quelconque des revendications précédentes,
**caractérisée en ce que**
l'agencement de refroidissement, en particulier les tubes (6) de l'agencement de refroidissement, font saillie dans ou à travers la région libre entre une roue dentée de la transmission, en particulier entre la roue dentée de sortie de la transmission et la paroi intérieure du boîtier (1) de la transmission,
en particulier, la roue dentée étant en prise avec une roue dentée supplémentaire.

10. Transmission selon l'une quelconque des revendications précédentes,
**caractérisée en ce que**
la transmission est une transmission à arbres parallèles et/ou présente des roues dentées supplémentaires.

11. Transmission selon l'une quelconque des revendications précédentes,
**caractérisée en ce que**
chacun des tubes (6), en particulier des premier et second types, présente une région courbée en forme de U qui relie deux régions rectilignes de même longueur du tube respectif (6),
les deux régions rectilignes de même longueur du tube respectif (6) du premier type étant plus courtes que les deux région rectilignes de même longueur du tube respectif (6) de second type,
en particulier, la région courbée en forme de U du tube respectif (6) du premier type étant réalisée identique à la région courbée en forme de U du tube respectif (6) du second type.
